# EUROPEAN PATENT APPLICATION

(11) **EP 1 293 950 A1**
(43) Date of publication of application: **19.03.2003**
(21) Application number: 01307951.2
(22) Date of filing: 18.09.2001
(51) Int. Cl.: G09B 21/00, G06F 3/00

(54) **Haptic interface**

(71) Applicant: BRITISH TELECOMMUNICATIONS public limited company, London EC1A 7AJ (GB)
(72) Inventor: The designation of the inventor has not yet been filed

(57) **Abstract**

A haptic output device is associated with a computer or other text reading device. The haptic device is controlled by the computer to react to a users finger position to provide a reaction force which defines characters (for example using Moon alphabet representation) by simulating grooves or ridges on a virtual plane. Feelable texture may be added to standard characters whereby the characters (or other non-standard characters) may be used as short hand representation for particular user-selectable words or phrases.

## Description

The present invention relates to a haptic interface and more particularly to such an interface for enabling tactile reading of text based information.

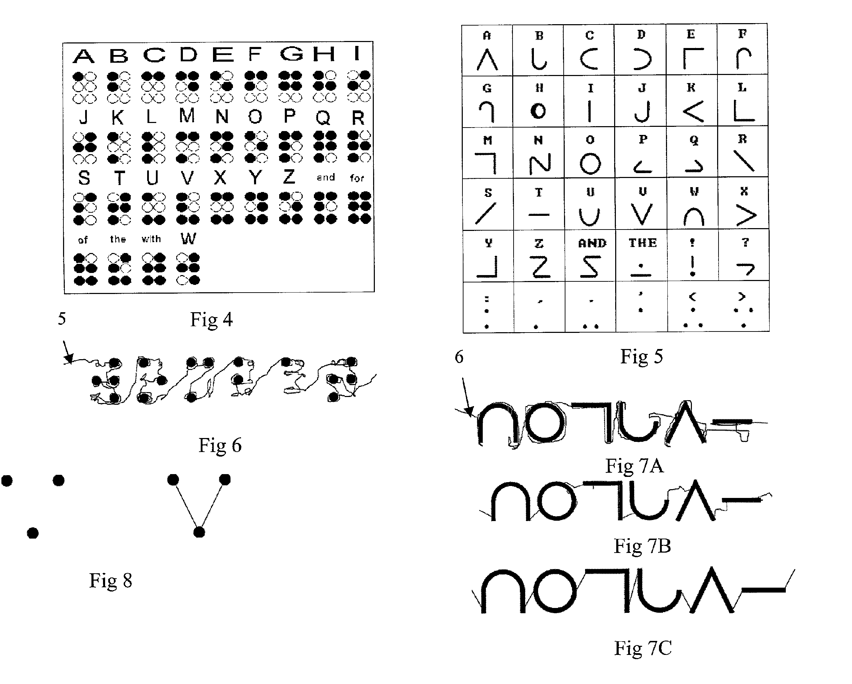

There are two standard tactile character sets designed for use by blind people in those countries which use a Roman type alphabet. Information about both the character sets as used in the United Kingdom can be obtained from the United Kingdom based charity known as the Royal National Institute for the Blind (RNIB). The RNIB host a site on the world wide web (internet) from which information may be obtained (http://www.rnib.org/braille). The most commonly used character set is that invented by Louis Braille in approximately 1829. Although there are minor differences in the Braille set used in different countries the basic arrangement of character representation is similar. Figure 4 of the accompanying drawings shows the UK Braille Character set based on a six dot matrix. (with acknowledgement to the RNIB).

According to the present invention there is provided a haptic interface in association with control means, the control means reading alphanumeric data from a text source, converting each character in said text source to a series of control signals defining a virtual surface carrying a tactile readable representation of the text and being responsive to data from the haptic interface to determine position and movement of a user probe around a virtual plane representative of a page in the text source to cause a change in the control signals to effect control of apparent force felt by the user whereby non-visual reading of the text is facilitated.

Preferably the output represents the text in a known tactile alphabet which may be that invented in 1845 by Doctor William Moon and known as the "Moon" alphabet.

A haptic interface in accordance with the invention will now be described by way of example only with reference to the accompanying drawings of which:
Figure 1 is a sketch of "PHANToM 1.0" haptic output device (taken from literature supplied by Sensable Technologies Inc;
Figure 2 is a schematic representation of a virtual planar surface carrying a groove;
Figure 3 is a schematic representation of differing ways of touching virtual images;
Figure 4 shows the Braille alphabet (from RNIB literature);
Figure 5 shows the Moon alphabet (from RNIB literature);
Figure 6 shows an implementation of Braille haptic output;
Figures 7a to c are schematic representations of an haptic output in accordance with the invention with various enhancements; and
Figure 8 shows a variation of the Moon alphabet to facilitate it's use by a haptic reader.

Computers can not only give output to users by sight and sound but also haptically. This can be used to give an abstract signal (e.g. a vibrating alarm), to simulate the response of a mechanical control (e.g. a shaking gaming joystick) or to simulate a feelable scene (e.g. a computer Braille output simulating embossed Braille characters). It is the latter which is relevant here.

There are numerous ways these outputs function mechanically. The two ways most relevant to this patent are force-feedback and shape changing. In shape changing, the effector changes its shape to imitate the shape of the objects in the scene being simulated. Force-feedback displays instead apply to the user the forces that the objects in simulated scene would give as reaction forces if they were really touched.

In our co-pending European Patent Application No. 01305947.2 there is disclosed a method for adapting haptic interface output characteristics to correct for per-person differences in the sense of touch. For simplicity some of the drawings attached hereto have been reproduced from the above-mentioned application in order to simplify the description of the present invention.

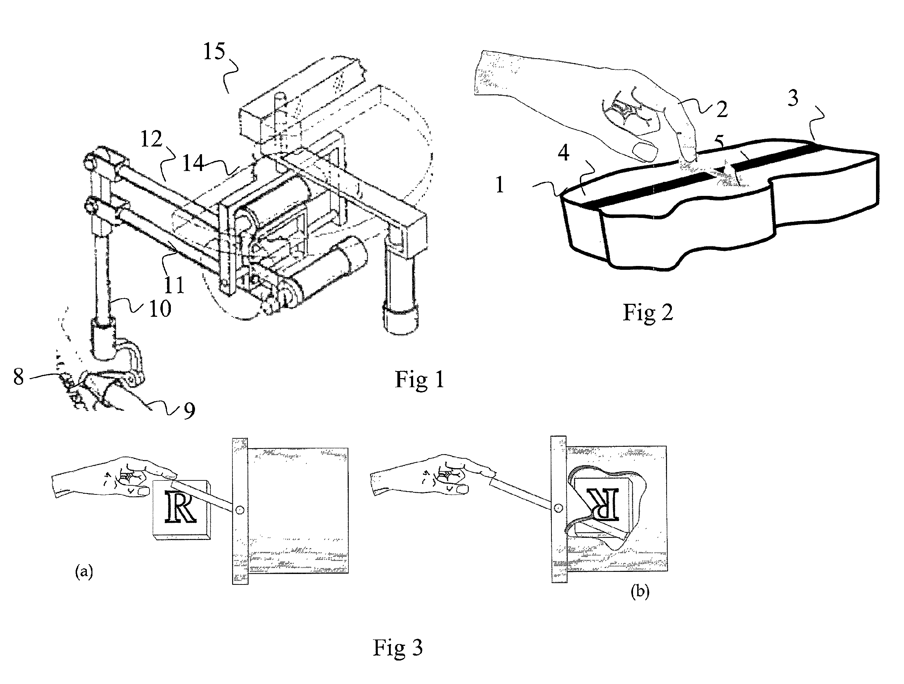

There are many examples of haptic output devices which have the capability of exerting a force back to a user and of detecting force applied by the user and the position of the user's operating function. In the present specific description the "PHANToM 1.0" haptic output device available from "SensAble Technologies, Inc." (15 Constitution Way, Woburn, MA, USA, http://www.sensable.com) is considered an appropriate device to implement the invention. A sketch of a PHANToM Haptic output device is shown in figure 1 (from PHANToM sales literature) to which reference is now made.

The device in figure 1 has an interchangeable user contact in the form of a thimble 8 or a stylus (not shown) connected to an arm 10 which has three degrees of freedom left/right ("X"), in/out ("Y") and up/down ("Z")). It will be appreciated that more sophisticated devices having additional degrees of freedom could be calibrated and controlled by the method hereinafter described. However, to simplify description and to facilitate understanding of the invention it is only necessary to consider the X,Y,Z co-ordinates which permits three dimensional objects to be simulated. The PHANToM has a motor driver and sensor for each of the X, Y and Z axes whereby force can be exerted to the user contact 8 and the position of the user's finger 9 can be sensed. Thus, if the user moves finger 9 vertically (Z) with respect to his present position, the movement is sensed by the angular displacement of levers 11 and 12 pivotally about the mounting frame. Similarly, a motor attached to levers 11 and 12 may exert force in the Z direction.

Additionally, moving the finger 9 in the Y direction causes pivotal movement of lever 14 with respect to the frame because of the differential displacement of levers 11, 12 with respect to each other acting on the vertical arm of lever 14. Again by applying a motor force on lever 14 enables force simulation in the Y direction

Finally, movement in the horizontal plane causes the assembly to move about the pivot 15 which can be appropriately sensed as movement on the X axis and motor action to exert force against the pivotal motion may be applied appropriately. The device of Figure 2 while being referred to within the following text is a known device such that further constructional detail is not deemed necessary in the context of the present description. It will be appreciated that the haptic output device can be obtained from the manufacturer with appropriate description to enable the user to provide signalling for the motor action and to receive signalling in respect of position location.

Thus as used herein a force exerted in the X direction indicates an appropriate electrical signal being transmitted to the motor controlling movement on the X-axis in response to a sensed position of a user's finger in the X direction. Continuous sensing of the X-direction location enables the processor to determine the amount of power to be applied - stable, increasing or decreasing - to the X axis motor to effect simulation of the contour map in the X direction at the appropriate Y,Z locations.

Similarly, a force exerted in the Y direction indicates an appropriate electrical signal being transmitted to the motor controlling movement on the Y-axis in response to a sensed position of a user's finger in the Y direction. Continuous sensing of the Y-direction location enables the processor to determine the amount of power to be applied - stable, increasing or decreasing - to the Y axis motor to effect simulation of the contour map in the Y direction at the appropriate X and Z locations.

Also, for the avoidance of doubt, a force exerted in the Z direction indicates an appropriate electrical signal being transmitted to the motor controlling movement on the Z-axis in response to a sensed position of a user's finger in the Z direction. Continuous sensing of the Z-direction location enables the processor to determine the amount of power to be applied - stable, increasing or decreasing - to the Z axis motor to effect simulation of the contour map in the Z direction at the appropriate X and Y locations.

It will be appreciated that continuous adaptation of the forces on the X, Y and Z motors will be required in a correlated manner since the various movements of the user's finger 9 will result in sensed changes in all three directions.

Thus, by effecting force in each of the directions, simulation of the effect of three dimensional objects can be obtained. For example if a "vertical" wall is present then a strong force will be felt in the X direction preventing movement of the finger through the wall from its nominal base position to its top. Thus the user is encouraged to track vertically (Z) effectively in free space and may seek to travel in the Y direction to determine the location of the back or front ends of such a wall. Tracking in the Y direction the user may encounter a "corner" comprising a high force in both X and Y directions so that the user can either track back along the X or Y directions in search of other avenues of "escape" or can seek to move in the Z direction. If the simulation is in effect a "room" then tracking in the Z direction enables the user to locate the "ceiling".

Other effects can be simulated. Thus if a simulated foam barrier is present for example moving in to the foam in the X direction for example will encounter a gradually increasing X-motor resistance, possibly varying to reflect the "bounce" back from the resilience of the foam. Such simulations are known and are only discussed here to facilitate an understanding of the underlying technology to which the invention is applied.

Referring also to Figure 2, it will be appreciated that in order to simulate the effect of a groove 1, the force feedback needs to simulate to the users finger 2, a virtual block 1 providing a planar surface 4. As the user's finger tracks in the direction of arrow 5 (the X direction) across the planar virtual surface, the user will first encounter a reduction in force feedback in the z direction so that (effectively) the finger 2 drops down a sidewall to a simulated base of the groove 1. Tracking further in the X direction the user will now encounter force feedback in the X direction thus encouraging the user to track up the wall of the groove 1 again to track further in the X direction along the surface 4. Note that in the present case there are no comparative changes in the Y direction such that regardless of the user's finger position only the X and Z forces need to change.

Referring briefly to Figure 3, taken from a dissertation submitted to the University of London by Andrew Hardwick, ("Haptic Simulation for Psychophysical Investigations"), it was found that using a haptic device to simulate the presence of a cube resulted in differing perceptions of where the front, sides and back, top and bottom of the cube were in relation to the user's finger. This appears to arise because some people consider that the simulated object is what they are "touching" (direct contact, figure 3 (a)) while others considered the object to be away from them such that they were "feeling" the object using a probe at a distance (indirect contact, figure 3 (b)). This effect, while having no adverse effects on perception may need to be taken in to account when determining user preferences for orientation of simulations being presented to the user.

Figure 4 shows the Braille alphabet which is suited to computer output using an electro-mechanical activated dot matrix. Thus by assembling a row of six pin matrices it is possible to display a line of text from a computer readable file. More usually such output devices (not shown) have eight pins for each character (so-called Computer-Braille) with the lower two pins of the matrix representing cursor position, control or shift characters and other characteristics of computer text. The upper six matrix pins use standard Braille indication. Such devices include the Navigator available from Blazie Engineering Ltd, Windermere House, Kendall Avenue, London, W3 OXA, England (who also supply a matrix output device called "PowerBraille" and the Blind Voyager from Concept Systems (http://www.conceptsystems.net/products/bv.htm).

As shown in Figure 6, using a haptic output device such as the Phantom for providing Braille output is possible but is not particularly practical since the user must track all six (eight) potential dot positions in some way in order to track the text. This results in a time consuming exploratory path as shown by the line. Thus whilst a virtual Braille reader comprising a single point haptic output device has been considered it is not thought to be a practical alternative to dot matrix output devices.

One possible problem with the Braille alphabet is that for more mature persons, those who develop sight problems, it is not particularly easy to learn. Further, it is known that those who use Braille from early childhood develop a significantly greater concentration of nerve endings in the fingertips which facilitates reading of raised dot characters.

The major problem with Moon has been that until recently moon impressed documents could not be readily reproduced. Thus while the character set lends itself to easy learning by those less sensitive to dot matrices few documents, books etc have been available.

Turning then to figure 5, the moon alphabet character set is shown while figure 7 below shows some adaptations of the output from a computer controlling a haptic feedback device. The same word "WOMBAT" has been used throughout the figures since it demonstrates some important aspects of the potential adaptations of output to assist the user.

User preference for the output to be sensed is taken in to account by the invention. For example, using a haptic output device the size of each character can be adjusted to suit the user. Thus some users may be able to detect relatively small characters while others will require a much magnified output. Thus regardless of individual sensitivity, the computer program can be adapted to suit the user.

Secondly, some users will prefer to sense a groove along which to track while others will prefer a ridge. Inversion of the path to be traced is readily provided in software. It will also be realised that a haptic device may be connected for example through the public switched telephone network so that proximity of the device to the computer providing information is not essential provided that signalling of the force exerted by the user and position data can be fed back to the process and the process can return appropriate force to the user. In the alternative coupling the haptic output device to a local processor (PC) enables output of alpha numeric characters in Moon regardless of the source of the text, for example by downloading from the Internet.

Thus compare path 5 of Figure 6 with path 6 of figure 7A and note that it is much simpler for the user to track Moon alphabet characters that to track Braille characters using the same kind of output device. There are many benefits to the present invention including, but not limited to enabling blind users who prefer Moon to Braille to have computer text outputs, facilitating the labelling of tactile output drawings and diagrams, or virtual worlds, assisting variation in the output size and style of characters and simplifying learning to read by sense of touch. Particularly valuable in this respect is the ability to vary the output characteristics to suit the individual user and to be able to make such changes dynamically. For example, not only is it possible to change from ridge to groove to facilitate reading but also to increase the height or depth of the characters output. Thus over time, as a reader becomes more experienced varying the output characteristics enables a faster reading track by providing for shorter path distances to be taken. Of course, the opposite course may be taken if a person begins to lose sensitivity with age or illness in so far as the character representations may be increased in size, depth, height, spacing to permit the user to continue to enjoy the use of text outputs.

The system of the present invention comprises commercially available hardware and software developed by the inventor. As stated above with reference to Figure 1, the hardware must be able to read in the position of user's finger (or a stylus held by the user) and output a force to the user. The software must calculate an appropriate force from the position information & the text required to be displayed such that the movement and force provides a virtual output which feels as if one is feeling the text as Moon characters.

The hardware comprises a commercially available SensAble Phantom force-feedback device attached to desktop computer.

The software mathematically calculates the force from the position when required (which is once per millisecond for a Phantom) using an algorithm developed by the inventor for simulating textured solid objects as force fields. An example of an algorithm which may be adapted was published in 'Tactile Display of Virtual Reality from the World Wide Web - a Potential Access Method for Blind People' by A Hardwick, S Furner & J Rush at IEE Displays 18, pp. 153-61 in 1998. The algorithm is adapted by substituting characters with the Moon alphabet represented as textures.

To assist understanding, there follows a summary of the existing solid body simulating part of the algorithm: solid objects are represented as three dimensional force fields; for each supported geometric category of solid, a set of routines are available that will calculate if a given point is with the object and, if it is, the distance and direction out to the nearest surface of the object; when the user's position is not in the object, there is no force applied to the user; when the contact point is in the object, there is a reaction force applied to the user; this force is directed outwards to the nearest surface of the object; the magnitude of the force is proportional to the distance of the contact point from the surface with the ratio determined by the desired hardness; the force is capped because there is a physical limit to the force that can be generated by the hardware; objects can be grouped hierarchically to form compound objects which are then searched hierarchically to find which, if any, the user is touching and the force calculated for that one.

In summary also, the existing texture simulating part of the algorithm provides for textures to be represented as two dimensional maps; for each supported geometric category of texture, a set of routines are available that will calculate the normal displacement of the surface and the direction of the local normal to the surface at any position given 2-d coordinates; force fields are calculated for textured solids as for the untextured solids above except that the normal displacement and direction from the textures applied to the solids' surfaces are taken into account; the outwards normal displacement of the surface is added to the depth the user is calculated to be below the smooth surface when calculating if the user is in an object; it is also added to the depth when calculating the magnitude of the reaction force; after the reaction force is calculated, the direction of the local normal to the texture surface is calculated and the correct in-plane force components are added to the reaction force so that the total reaction force is normal to the textured shape at the point of contact.

Now, the addition the modifications needed for displaying Moon characters as textures are discussed. Most Moon characters can be composed of circular arcs & straight lines so two new texture categories are implemented for these two shapes; for each of these, the line width & height can be specified; for the lines, the start and end points can also be specified; for the arcs, the centre & angular limits can also be specified; two other new categories are also implemented, a grouping texture and an end cap; the grouping texture is used to combine other textures (by calculating the normal displacement from each and returning the result from one with most extreme displacement); the end cap texture is a small round that is used to smooth off the ends of lines and the corners formed by lines joining at angles; the transverse cross-section each straight line, arc & end cap is the same approximately triangular form (e.g. triangular with a slight rounding of the apex to prevent a discontinuity in the direction of the normal combining with the discrete time step nature of the simulation to cause oscillations).

The few characters that are not composed of single continuous lines that can be composed of straight lines and circular arcs are 'H', some punctuation and some abbreviations. The 'H' of standard Moon consists of a small 'O' with a thickened left side and is the only character where line thickness is significant. Because line thickness is not likely to be as quickly readable as path when tracing out letters haptically, this letter could optionally be modified into a simple small 'O' or some unused shape (but still in keeping with the rest of Moon) for output. Some of the punctuation and abbreviation characters include separated dots. The end cap character component can be used alone as a dot in this case.

The system is programmed in C+ + (the categories above are implemented as classes) for the Win32 platform as a DLL and uses the Phantom Ghost API to interact with the Phantom hardware, albeit bypassing the Ghost haptic modelling routines and supplying forces explicitly by having the above algorithm called from a Ghost force-field call-back function rather than instructing Ghost to simulate particular objects.

A Labview program is used as an experimental front end for the specification of text to display and the (character size etc.) settings.

The height of the lines used to make the characters can be set as negative to make the characters into grooves rather than conventional ridges. Whereas ridges are easier to feel cutaneously on paper than grooves, grooves are easier to follow with point contact than ridges and it is more obvious when a line end is reached. Thus it will be seen that using ridges with point contact as in Figure 7A there is a tendency for the path to wander while tracking whereas, considering Figure 7B (where a groove simulation is provided, the path is more defined.

In a still further improvement shown in Figure 7C, short guidelines between the characters may be provided. These guidelines are found to be best simulated using a lower ridge or shallower groove and may facilitate the avoidance of the user over running a looped character (such as O or H).

Referring briefly to Figure 8, it will be noted that Moon also includes some point characters such as punctuation marks and special word characters. The forward arrow character (>) for example comprises three dots in a triangular format. By linking dot representation characters by less pronounced guidelines as shown on the right hand side of figure 8 the user is guided around the character without the need to search in a haphazard manner.

In a further enhancement, subject to user preference, the possibility of overrunning the looped characters can be overcome by inserting a small gap in to the character simulation particularly where guidelines are in use between characters. Because the haptic output is versatile and readily adapted to individual user preference, where a reader has problems identifying particular characters, for example separating the thick lined circle of H from the standard O. it is possible to provide an alternative representation of the H should the user so require. Thus the user may be invited to select from a number of alternative representations previously stored to represent alternative characters or such characters may be user assigned to regular words which may appear in texts being read.

Thus a user may choose to represent his or her own name by a selectable single "new Moon" character. Alternatively using feedback sensing and storing from the haptic device a user may create a new representation which could be stored and associated with the particular user.

It should also be noted that while the invention has been discussed with reference to the Moon alphabet and Latin characterisations, other alphabet simulations using curves and/or lines to represent characters are readily simulated by the present system.

The system described above allows free exploration of the simulated text space by the user. An alternative, which may be useful for teaching or for users with impaired motor abilities, is to constrain the motion. There are many ways and degrees of constraint. For example: the user could be constrained to moving on the paper surface rather than being allowed to move up off it; be constrained to moving on the path of the lines that comprise the characters & the guiding lines rather than being able to skirt around them; or even be forcibly moved with time along that path. Note that some of these may not be suitable for combination with feeling tactile diagrams labelled using this system because the constraints may prevent exploration of the diagrams though the user could switch between free diagram feeling and constrained text feeling modes. The user might also be constrained to a single line of text at any one time with the next line of text only being prepared for simulation when a first line is completed.

For documents that require more space than will fit on one page in the workspace, switching to successive pages could be triggered manually (e.g. by a separate key press or by a gesture applied to the haptic input/output device) or automatically (e.g. when the end of a page is reached).It will of course be realised that text may be scrolled in to the users reading line so that step changes in the text may not be necessary and the user may only require a single line reading area to be presented.

While the present invention has been described using an I/O device having three degrees of freedom, it is equally applicable to less expensive output devices if using the constrained to paper surface or constrained to line path mode. As the exploration space can be reduced to two dimensions for text feeling enabling display on two degree of freedom force feedback devices instead of three degree of freedom devices more compact or cheaper readers can be constructed.

Another feature of the invention enables the orientation of the simulated paper surface to be changed. Thus a reader may prefer to have the "surface" at an angle, may prefer a landscape workspace compared to a portrait workspace or could select other constraints to orientation.

In yet another enhancement it is possible to add texture to the character output representations, which may again be a user- selectable feature. Adding texture to the character output may enable the creation of user recognisable "short hand" representations for particular words or phrases in addition to or instead of assign pre-defined or user created non-standard representations. For example by adding shallow horizontal ridges in the left arm of a Moon representation of "A" the character could represent "Andrew" while adding such texture in the right arm the character may be representing "Anthea". Other vertical or horizontal textures, which need not be of significant displacement in the virtual plane compared to the representation of the character, will be readily apparent in dependence upon the character shaping.

## Claims

1. A haptic interface in association with control means, the control means reading alphanumeric data from a text source, converting each character in said text source to a series of control signals defining a virtual surface carrying a tactile readable representation of the text and being responsive to data from the haptic interface to determine position and movement of a user probe around a virtual plane representative of a page in the text source to cause a change in the control signals to effect control of apparent force felt by the user whereby non-visual reading of the text is facilitated.

2. A haptic interface in association with control means as claimed in claim 1 in which the text is represented by a series of apparent grooves in the virtual plane.

3. A haptic interface in association with control means as claimed in claim 1 in which the text is represented by a series of apparent ridges on the virtual plane.

4. A haptic interface in association with control means as claimed in claim 1 in which the representation of text is user selectable to be either a series of apparent ridges on the virtual plane or a series of apparent grooves in the virtual plane.

5. A haptic interface in association with control means as claimed in any one of claims 1 to 4 in which the apparent size of each character represented is user selectable whereby character size may be increased for less sensitive users and decreased for more sensitive users.

6. A haptic interface in association with control means as claimed in any preceding claim in which characters formed by a plurality of parts have the parts linked by tracing paths in the virtual plane, said paths being of less pronounced displacement with respect to the virtual plane.

7. A haptic interface in association with control means as claimed in any preceding claim in which characters are linked to a respective succeeding character and/or a respective preceding character by respective guide paths, said guide paths being of less pronounced displacement with respect to said virtual plane.

8. A haptic interface in association with control means as claimed in any preceding claim in which each character is represented by its respective Moon alphabet representation.

9. A haptic interface in association with control means as claimed in any preceding claim in which the control means includes data defining a plurality of character representations additional to a standard character set, the control means being responsive to user input to allocate any such character representation to mean a word, phrase or symbol.

10. A haptic interface in association with control means as claimed in claim 9 in which the control means is responsive to user input to store a representation of a non standard character required by the user to represent a word, character, phrase or symbol selected by the user.

11. A haptic interface in association with control means as claimed in claim any preceding claim in which user selectable texture may be added to character representations.

12. A haptic interface in association with control means as claimed in claim 11 in which each texture modified characters may be user assigned to represent a respective word, character, phrase or symbol.
